(19) **Europäisches Patentamt / European Patent Office / Office européen des brevets**

(11) **EP 4 607 761 A1**

(12) **EUROPEAN PATENT APPLICATION**
published in accordance with Art. 153(4) EPC

(43) Date of publication:
**27.08.2025 Bulletin 2025/35**

(21) Application number: **22963216.1**

(22) Date of filing: **29.10.2022**

(51) International Patent Classification (IPC):
**H02K 1/27** (2022.01)    **H02K 1/22** (2006.01)

(52) Cooperative Patent Classification (CPC):
**H02K 1/22; H02K 1/27**

(86) International application number:
**PCT/CN2022/128457**

(87) International publication number:
**WO 2024/087235 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Digital Power Technologies Co., Ltd.**
**Shenzhen, Guangdong 518043 (CN)**

(72) Inventors:
• **HUANG, Weihua**
  **Shenzhen, Guangdong 518043 (CN)**
• **LAN, Binan**
  **Shenzhen, Guangdong 518043 (CN)**
• **SHI, Chaojie**
  **Shenzhen, Guangdong 518043 (CN)**

(74) Representative: **Isarpatent**
  **Patent- und Rechtsanwälte**
  **Barth Hassa Peckmann & Partner mbB**
  **Friedrichstraße 31**
  **80801 München (DE)**

(54) **ELECTRIC MOTOR AND VEHICLE**

(57) This application discloses a motor and a vehicle. The motor includes a rotor and a stator. The rotor is disposed in the stator and is spaced apart from the stator to form an air gap. The rotor includes a central iron core body, a plurality of peripheral iron core bodies, and a sleeve. The plurality of peripheral iron core bodies and the central iron core body are fixedly accommodated in the sleeve. Each peripheral iron core body is spaced apart from the central iron core body to form a first separation gap, a second separation gap, and a third separation gap that communicate with each other. The first separation gap and the second separation gap are respectively configured to accommodate a first permanent magnet and a second permanent magnet. A width of the third separation gap in a radial direction of the rotor is greater than a width of the first separation gap and greater than a width of the second separation gap, to increase magnetic resistance of the rotor in the motor, thereby further increasing a torque of the motor.

FIG. 3

## Description

## TECHNICAL FIELD

This application relates to the field of motor technologies, and in particular, to a motor and a vehicle.

## BACKGROUND

Increasing power density is always one of the important objectives of motor design. Power of a motor is equal to a product of a rotation speed and a torque. Therefore, increasing the torque and the rotation speed of the motor can effectively increase the power density of the motor.

At present, in order to enable the motor to have a larger torque and a higher rotation speed, a larger size of the motor is usually designed. In one aspect, the motor with the larger size can accommodate a larger permanent magnet, so that the motor can rotate at a high speed. In a further aspect, the motor with the larger size can have higher mechanical strength, and the motor can adapt to high-speed rotation. However, increasing the power density of the motor by increasing the size of the motor is not applicable to some motors with specific requirements on the size.

## SUMMARY

A technical problem to be resolved by embodiments of this application is to provide a motor and a vehicle, to reduce magnetic leakage, and increase magnetic field strength of a rotor in the motor, so as to increase a rotation speed of the motor, and further increase magnetic resistance of a direct axis in the rotor, so as to increase a torque of the rotor, thereby further increasing power density of the motor.

According to a first aspect, this application provides a motor, where the motor includes a rotor and a stator, the rotor is disposed in the stator and is spaced apart from the stator to form an air gap, the rotor includes a central iron core body, a plurality of peripheral iron core bodies, and a sleeve, and the plurality of peripheral iron core bodies and the central iron core body are fixedly accommodated in the sleeve, where the central iron core body includes a shaft hole that is provided in an axial direction and a plurality of mounting positions distributed in a circumferential direction of the central iron core body, the plurality of peripheral iron core bodies are in a one-to-one correspondence with the plurality of mounting positions, and each peripheral iron core body is disposed at a corresponding mounting position; and each peripheral iron core body and the central iron core body are spaced apart to form a first separation gap, a second separation gap, and a third separation gap that communicate with each other, the first separation gap and the second separation gap form a first included angle less than 180° toward the sleeve and are respectively configured to accommodate a first permanent magnet and a second permanent magnet, the first permanent magnet and the second permanent magnet are disposed on two sides of the third separation gap, the first permanent magnet and the second permanent magnet are separately spaced apart from the sleeve to form a first magnetic isolation gap and a second magnetic isolation gap, and the third separation gap includes a first area and a second area, where a width of the first area in a radial direction of the rotor is equal to a width of the first separation gap or the second separation gap; and the second area includes at least one of a notch area formed through recessing of the peripheral iron core body toward the sleeve, and a notch area formed through recessing of the central iron core body toward the shaft hole.

The first permanent magnet and the second permanent magnet are disposed on the two sides of the third separation gap, and the first permanent magnet and the second permanent magnet are separated from each other by using the third separation gap, to reduce magnetic leakage of the first permanent magnet and the second permanent magnet. The first magnetic isolation gap is located between the sleeve and the first permanent magnet, and magnetic leakage of the first permanent magnet is reduced by using the first magnetic isolation gap. The second magnetic isolation gap is located between the sleeve and the second permanent magnet, and magnetic leakage of the second permanent magnet is reduced by using the second magnetic isolation gap. Magnetic leakage of the first permanent magnet and the second permanent magnet is reduced, so that magnetic flux density of a rotor magnetic field generated by the rotor is increased, a magnetic flux of the rotor is increased, and a torque of the rotor is increased.

The first separation gap and the second separation gap form a first included angle less than 180°, and the first permanent magnet disposed in the first separation gap and the second permanent magnet disposed in the second separation gap are approximately arranged in a V-shaped manner. When the rotor is used in the motor, magnetomotive force generated by the motor when the motor is unloaded can be closer to a sine wave, so that harmonic content in magnetic flux density of the air gap in the motor can be reduced, and iron loss of the motor when the motor is unloaded can be further reduced.

A width of the first area in the radial direction of the rotor is equal to a width of the first separation gap or the second separation gap, and the third separation gap includes the first area and the second area. It can be learned that a width of the third separation gap is greater than a width of the first separation gap and greater than a width of the second separation gap. The third separation gap can increase direct-axis magnetic resistance of the rotor, and increase magnetic resistance difference between a direct axis and a quadrature axis of the rotor, so as to increase the torque of the motor.

With reference to the first aspect, in a possible implementation, a rotor axial cross-sectional shape of the first area is a trapezoid, and a rotor axial cross-sectional shape of the second area is a rectangle or a square.

With reference to the first aspect, in a possible implementation, each peripheral iron core body, each first area, and each second area are axis-symmetrical in the radial direction of the rotor.

With reference to the first aspect, in a possible implementation, each peripheral iron core body is provided with at least one axis-symmetrical slot, the at least one slot is configured to accommodate at least one permanent magnet, and the at least one permanent magnet is spaced apart from an end wall of the slot to form at least one magnetic isolation slot, or the at least one permanent magnet is spaced apart from the sleeve to form at least one magnetic isolation gap. The slot of each peripheral iron core body accommodates a permanent magnet, so that the magnetomotive force generated by the rotor can be closer to the sine wave, and the harmonic content in the magnetic flux density of the air gap in the motor is reduced, and iron loss of the motor when the motor is unloaded can be further reduced.

According to a second aspect, this application discloses a motor, where the motor includes a rotor and a stator, the rotor is disposed in the stator and is spaced apart from the stator to form an air gap, the rotor includes a central iron core body, a plurality of peripheral iron core bodies, and a sleeve, and the plurality of peripheral iron core bodies and the central iron core body are fixedly accommodated in the sleeve, where the central iron core body includes a shaft hole that is provided in an axial direction and a plurality of mounting positions distributed in a circumferential direction of the central iron core body, the plurality of peripheral iron core bodies are in a one-to-one correspondence with the plurality of mounting positions, and each peripheral iron core body is disposed at a corresponding mounting position; each peripheral iron core body and the central iron core body are spaced apart to form a first separation gap, a second separation gap, and a third separation gap that communicate with each other, the first separation gap and the second separation gap form a first included angle less than 180° toward the sleeve and are respectively configured to accommodate a first permanent magnet and a second permanent magnet, the first permanent magnet and the second permanent magnet are disposed on two sides of the third separation gap, and the first permanent magnet and the second permanent magnet are separately spaced apart from the sleeve to form a first magnetic isolation gap and a second magnetic isolation gap; and the rotor is provided with a plurality of magnetoresistive holes, where a quantity of the magnetoresistive holes is the same as a quantity of third separation gaps, and the plurality of magnetoresistive holes are evenly disposed in the circumferential direction of the central iron core body, or the plurality of magnetoresistive holes are respectively disposed on the plurality of peripheral iron core bodies.

The plurality of magnetoresistive holes can increase direct-axis magnetic resistance in the rotor, so as to further increase a difference between direct-axis magnetic resistance and quadrature-axis magnetic resistance in the rotor, and the torque of the rotor can be further increased. The rotor is provided with the magnetoresistive holes, so that a weight can be reduced, thereby improving the power density of the rotor. With reference to the second aspect, in a possible implementation, each magnetoresistive hole and a third separation gap corresponding to the magnetoresistive hole are arranged in a radial direction of the rotor, and each magnetoresistive hole and the third separation gap corresponding to the magnetoresistive hole are axis-symmetrical in the radial direction of the rotor. Because each magnetoresistive hole and the third separation gap corresponding to the magnetoresistive hole are arranged in the radial direction of the rotor, and a direct-axis magnetic circuit in the rotor is concentrated near the third separation gap, each magnetoresistive hole existing in the rotor can greatly increase each direct-axis magnetic resistance of the rotor.

With reference to the second aspect, in a possible implementation, a rotor axial cross-sectional shape of each magnetoresistive hole is the same and is a rectangle or a square.

With reference to the second aspect, in a possible implementation, each peripheral iron core body is provided with at least one axis-symmetrical slot, and the at least one slot is configured to accommodate at least one permanent magnet; the at least one permanent magnet is spaced apart from an end wall of the slot to form at least one magnetic isolation slot, or the at least one permanent magnet is spaced apart from the sleeve to form a magnetic isolation gap; and the magnetoresistive hole of each peripheral iron core body is provided between the slot and the third separation gap, or the magnetoresistive hole of each peripheral iron core body is provided between the slot and the sleeve. The slot of each peripheral iron core body accommodates a permanent magnet, so that the magnetomotive force generated by the rotor can be closer to the sine wave, and the harmonic content in the magnetic flux density of the air gap in the motor is reduced, and iron loss of the motor when the motor is unloaded can be further reduced.

According to a third aspect, this application provides a motor, where the motor includes a rotor and a stator, the rotor is disposed in the stator and is spaced apart from the stator to form an air gap, the rotor includes a central iron core body, a plurality of peripheral iron core bodies, and a sleeve, and the plurality of peripheral iron core bodies and the central iron core body are fixedly accommodated in the sleeve, where the central iron core body includes a shaft hole that is provided in an axial direction and a plurality of mounting positions distributed in a circumferential direction of the central iron core body, the plurality of peripheral iron core bodies are in a one-to-one correspondence with the plurality of mounting positions, and each peripheral iron core body is disposed at a corresponding mounting position; each peripheral iron core body and the central iron core body are spaced apart to form a first separation gap, a second separation gap, and a third separation gap that communicate with each other, the first separation gap and the second separation gap form a first included angle less than 180° toward the sleeve and are respectively configured to accommodate a first permanent magnet and a second permanent magnet, the first permanent magnet and the second permanent magnet are disposed on two sides of the third separation gap, and the first permanent magnet and the second permanent magnet are separately spaced apart from the sleeve to form a first magnetic isolation gap and a second magnetic isolation gap; and each peripheral iron core body is provided with at least one axis-symmetrical slot in a radial direction of the rotor, the at least one slot is configured to accommodate at least one permanent magnet, and the at least one permanent magnet is spaced apart from an end wall of the slot or the sleeve.

The first magnetic isolation gap is located between the sleeve and the first permanent magnet, and magnetic leakage of the first permanent magnet is reduced by using the first magnetic isolation gap. The second magnetic isolation gap is located between the sleeve and the second permanent magnet, and magnetic leakage of the second permanent magnet is reduced by using the second magnetic isolation gap. Magnetic leakage of the first permanent magnet and the second permanent magnet is reduced, so that magnetic flux density of a rotor magnetic field generated by the rotor is increased, a magnetic flux of the rotor is increased, and a torque of the rotor is increased. The slot of each peripheral iron core body accommodates a permanent magnet, so that the magnetomotive force generated by the rotor can be closer to the sine wave, and the harmonic content in the magnetic flux density of the air gap in the motor is reduced, and iron loss of the motor when the motor is unloaded can be further reduced.

With reference to the third aspect, in a possible implementation, the slot is configured to accommodate a third permanent magnet and a fourth permanent magnet, the third permanent magnet and the fourth permanent magnet are separately spaced apart from the sleeve to form a magnetic isolation gap, or the third permanent magnet and the fourth permanent magnet are separately spaced apart from an end wall of the slot in which the third permanent magnet and the fourth permanent magnet are located to form a magnetic isolation slot, and the third permanent magnet and the fourth permanent magnet are spaced apart from each other to form a magnetic isolation gap. The third permanent magnet and the fourth permanent magnet can increase the magnetic flux density of the rotor, and the magnetic isolation slot or the magnetic isolation gap in each peripheral iron core body can reduce magnetic leakage of the third permanent magnet and the fourth permanent magnet, so that the magnetic flux of the rotor can be further increased, and the torque of the rotor can be further increased. The third permanent magnet and the fourth permanent magnet are separately spaced apart from the sleeve to form a magnetic isolation gap, or the third permanent magnet and the fourth permanent magnet are separately spaced apart from an end wall of the slot in which the third permanent magnet and the fourth permanent magnet are located to form a magnetic isolation slot, so that magnetic leakage of the third permanent magnet and the fourth permanent magnet can be reduced, the magnetic flux of the rotor can be further increased, and the torque of the rotor can be further increased.

With reference to the third aspect, in a possible implementation, each peripheral iron core body is provided with two slots, the two slots are axis-symmetrical in the radial direction of the rotor, the two slots are respectively configured to accommodate a third permanent magnet and a fourth permanent magnet, and the third permanent magnet and the fourth permanent magnet are separately spaced apart from the sleeve to form a magnetic isolation gap, or the third permanent magnet and the fourth permanent magnet are respectively spaced apart from end walls of the slots in which the third permanent magnet and the fourth permanent magnet are located to form a magnetic isolation slot. The third permanent magnet and the fourth permanent magnet can increase the magnetic flux density of the rotor, and the magnetic isolation slot or the magnetic isolation gap in each peripheral iron core body can reduce magnetic leakage of the third permanent magnet and the fourth permanent magnet, so that the magnetic flux of the rotor can be further increased, and the torque of the rotor can be further increased. The third permanent magnet and the fourth permanent magnet are separately spaced apart from the sleeve to form a magnetic isolation gap, or the third permanent magnet and the fourth permanent magnet are separately spaced apart from an end wall of the slot in which the third permanent magnet and the fourth permanent magnet are located to form a magnetic isolation slot, so that magnetic leakage of the third permanent magnet and the fourth permanent magnet can be reduced, the magnetic flux of the rotor can be further increased, and the torque of the rotor can be further increased.

With reference to the third aspect, in a possible implementation, each peripheral iron core body is provided with one magnetoresistive hole, and the magnetoresistive hole of each peripheral iron core body is provided between the slot and the third separation gap, or the magnetoresistive hole of each peripheral iron core body is provided between the slot and the sleeve. The magnetoresistive hole can increase direct-axis magnetic resistance in the rotor, so as to further increase a difference between direct-axis magnetic resistance and quadrature-axis magnetic resistance in the rotor, and the torque of the rotor can be further increased. Each peripheral iron core body is provided with a magnetoresistive hole, so that a weight can be reduced, thereby improving the power density of the rotor.

With reference to the third aspect, in a possible implementation, each peripheral iron core body is provided with two slots and two magnetoresistive holes, the two slots are axis-symmetrical in the radial direction of the rotor, the two slots are respectively configured to accommodate a third permanent magnet and a fourth permanent magnet, the sleeve is separately spaced apart from the third permanent magnet and the fourth permanent magnet to form a magnetic isolation gap, or an end wall on one end of each of the two slots is separately spaced apart from the third permanent magnet and the fourth permanent magnet to form a magnetic isolation slot, and an end wall on the other end of each of the two slots separately communicates with the two magnetoresistive holes, and widths of the two magnetoresistive holes in the radial direction of the rotor are both greater than widths of the two slots. The two magnetoresistive holes are located between the third permanent magnet and the fourth permanent magnet, and magnetic circuits in an area between the third permanent magnet and the fourth permanent magnet are relatively centralized. The magnetoresistive holes located between the third permanent magnet and the fourth permanent magnet have good magnetoresistive effect.

With reference to the third aspect, in a possible implementation, the two magnetoresistive holes communicate with each other, so that there is a relatively large gap between the third permanent magnet and the fourth permanent magnet, magnetic leakage of the third permanent magnet and the fourth permanent magnet can be reduced, and magnetic resistance of a direct axis in the rotor can also be increased.

According to a fourth aspect, this application provides a vehicle, where the vehicle includes a frame and the motor described above, and the motor is mounted to the frame.

**BRIEF DESCRIPTION OF DRAWINGS**

To describe the technical solutions in embodiments of this application or in the Background more clearly, the following describes the accompanying drawings for describing embodiments of this application or the Background.

FIG. 1 is a diagram of a structure of a vehicle according to an embodiment of this application;
FIG. 2 is a planar diagram of a motor according to an embodiment of this application;
FIG. 3 is a planar diagram of another motor according to an embodiment of this application;
FIG. 4 is a top view of a rotor of a single-V-shaped topology structure according to an embodiment of this application;
FIG. 5 is a top view of a rotor of another single-V-shaped topology structure according to an embodiment of this application;
FIG. 6 is a top view of a rotor of still another single-V-shaped topology structure according to an embodiment of this application;
FIG. 7 is a top view of a rotor of a V-plus-I-typed topology structure according to an embodiment of this application;
FIG. 8 is a top view of a rotor of a dual-V-shaped topology structure according to an embodiment of this application;
FIG. 9 is a top view of a rotor of another dual-V-shaped topology structure according to an embodiment of this application;
FIG. 10 is a top view of a rotor of still another dual-V-shaped topology structure according to an embodiment of this application;
FIG. 11 is a top view of a rotor of still another single-V-shaped topology structure according to an embodiment of this application;
FIG. 12 is a comparison diagram showing impact of a magnetoresistive hole in a rotor on a torque according to an embodiment of this application;
FIG. 13 is a top view of a rotor of still another single-V-shaped topology structure according to an embodiment of this application;
FIG. 14 is a top view of a rotor of another V-plus-I-typed topology structure according to an embodiment of this application;
FIG. 15 is a top view of a rotor of still another V-plus-I-typed topology structure according to an embodiment of this application;
FIG. 16 is a top view of a rotor of still another V-plus-I-typed topology structure according to an embodiment of this application;
FIG. 17 is a diagram of a structure of a rotor of still another dual-V-shaped topology structure according to an embodiment of this application;
FIG. 18 is a diagram of a structure of a rotor of still another dual-V-shaped topology structure according to an embodiment of this application;
FIG. 19 is a diagram of a structure of a rotor of still another dual-V-shaped topology structure according to an embodiment of this application;
FIG. 20 is a diagram of a structure of a rotor of still another dual-V-shaped topology structure according to an embodiment of this application; and
FIG. 21 is a diagram of a structure of a rotor of still another dual-V-shaped topology structure according to an embodiment of this application.

Descriptions of reference numerals:
a: motor; b: frame; 1: rotor; 12: central iron core body; 13: peripheral iron core body; 130: slot; 131: magnetic isolation slot; 132: magnetic isolation gap; 133: magnetoresistive hole; 134: magnetic bridge; 139: notch; 139a: positioning through hole; 14: rotation shaft; 14a: shaft hole; 15: first permanent magnet; 16: second permanent magnet; 17: third permanent magnet; 18: fourth permanent magnet; 19: sleeve; 20a: first separation gap; 20b: second separation gap; 20c: third separation gap; 20d:

first area; 20e: second area; 21: first magnetic isolation gap; 22: second magnetic isolation gap; 25: first included angle; 26: second included angle; 2: stator; 3: air gap; 32: permanent magnet.

## DESCRIPTION OF EMBODIMENTS

A permanent magnet motor provides excitation by using a permanent magnet without exciting current and exciting loss, so that efficiency and power density of the motor can be improved. The permanent magnet motor may be used as a driving motor of an electric vehicle. The permanent magnet motor includes a stator and a rotor. The stator is formed through laminated pressing, so that iron loss during running of the motor can be reduced. A three-phase alternating current winding is mounted on the stator for generating a rotating magnetic field of the stator. The rotor may be made into a solid or may be formed through laminated pressing, a permanent magnet is mounted on the rotor, and the permanent magnet is configured to generate a rotor magnetic field.

Permanent magnet motors may be divided into a surface-mounted motor (surface-mounted permanent magnet machine, SPM) and an inserted permanent magnet machine (Inserted Permanent Magnet Machine, IPM). In the surface-mounted motor, a permanent magnet is attached to a peripheral surface of a rotor iron core. In the inserted motor, a magnetic slot is provided in a rotor iron core, and a permanent magnet is disposed in the magnetic slot. Built-in forms of the permanent magnet may be divided into an I shape, a single-V shape, a dual-V shape, a V-plus-I shape, and the like.

Compared with the surface-mounted permanent magnet machine, the inserted permanent magnet machine has asymmetric rotor magnetic circuits, and the rotor generates a magnetoresistive torque during rotation, so that power density and an overload capability of the motor can be improved, and field-weakening speed expansion is easier to implement. When a permanent magnet motor is used as an electric motor, a three-phase current flows into the three-phase alternating current winding of the stator, and the stator generates a rotating magnetic field. The rotor magnetic field interacts with the stator rotating magnetic field, and an electromagnetic torque is generated on the rotor to drive the rotor to rotate.

Increasing power density is always one of the important objectives of inserted motor design. Power of a motor is equal to a product of a rotation speed and a torque. Therefore, increasing the torque and the rotation speed of the motor can effectively increase the power density of the motor.

Currently, to enable a motor to have a larger torque and a higher rotation speed, a larger size of the motor is usually designed. In one aspect, the motor with the larger size can accommodate a larger permanent magnet, so that the motor can rotate at a high speed. In a further aspect, the motor with the larger size can have higher mechanical strength, and the motor can adapt to high-speed rotation. However, increasing the power density of the motor by increasing the size of the motor is not applicable to some motors with specific requirements on the size.

To make the objectives, technical solutions, and advantages of this application clearer, the following further describes this application in detail with reference to the accompanying drawings.

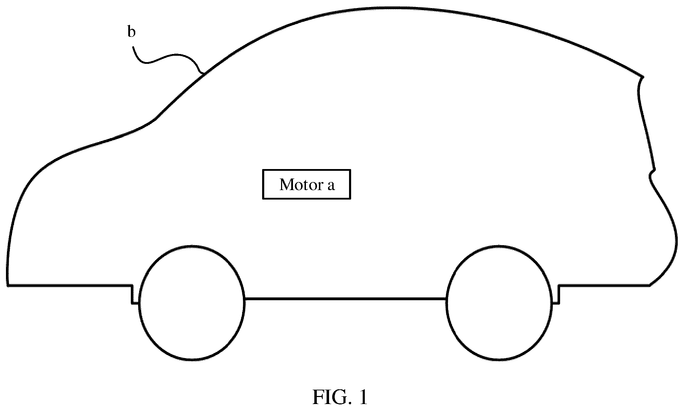

This application discloses a vehicle. The vehicle may be but is not limited to an electric car, an electric bus, an electric motorcycle, or the like. FIG. 1 is a diagram of a structure of a vehicle according to an embodiment of this application. The vehicle may include a motor a and a frame b. The frame b may be used as a structural framework of the vehicle. The frame b can be configured to support the motor a and can fasten the motor a. The motor a may be used as a power source for driving the vehicle to travel.

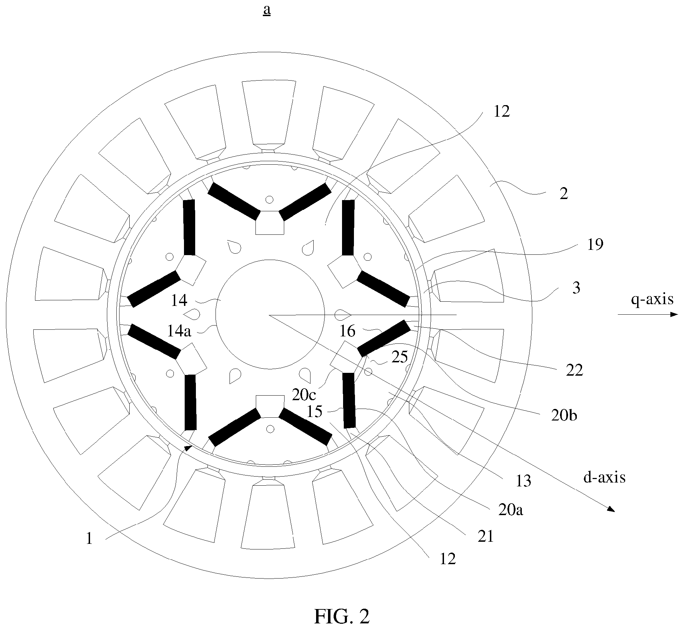

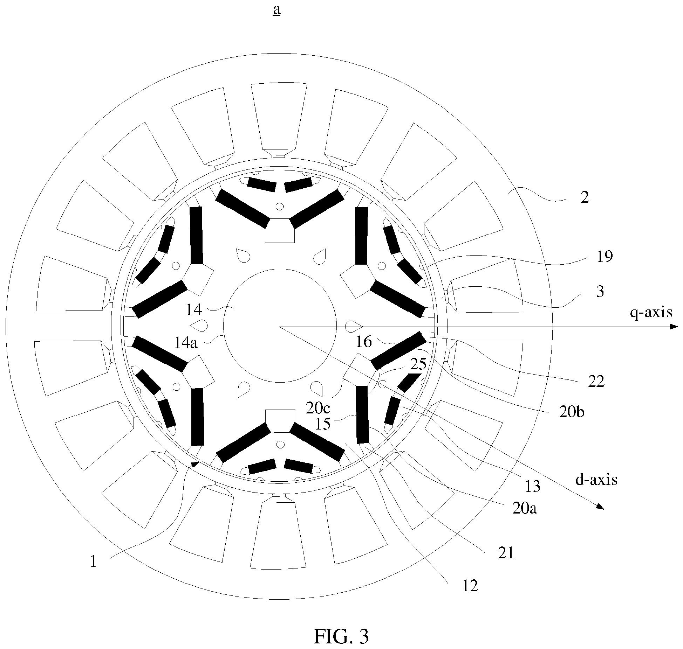

With reference to FIG. 2 and FIG. 3, FIG. 2 is a planar diagram of a motor according to an embodiment of this application, and FIG. 3 is a planar diagram of another motor according to an embodiment of this application. A motor a includes a stator 2 and a rotor 1, and the stator 2 may have a cylindrical inner cavity. The rotor 1 is approximately cylindrical, the stator 2 is sleeved outside the rotor 1, and the rotor 1 is disposed in the cylindrical inner cavity of the stator 2. The rotor 1 is disposed at a central position of the cylindrical inner cavity of the stator 2, an air gap 3 is reserved between an outer circumferential wall of the rotor 1 and an inner wall of the stator 2, and the rotor 1 may generate a magnetic field of the rotor 1. When the motor a is powered on, the stator 2 can generate a rotating magnetic field, and the rotating magnetic field of the stator 2 interacts with the magnetic field of the rotor 1, so that the rotor 1 can rotate relative to the stator 2.

The rotor 1 includes a rotation shaft 14, a central iron core body 12, a plurality of peripheral iron core bodies 13, and a sleeve 19. The central iron core body 12 includes an axial-through shaft hole 14a and a plurality of mounting positions distributed in an axial direction of the central iron core body 12. The rotation shaft 14 runs through the shaft hole 14a in an axial direction of the rotation shaft 14, and is fixedly connected to the central iron core body 12. The plurality of peripheral iron core bodies 13 are in a one-to-one correspondence with the plurality of mounting positions, and each peripheral iron core body 13 is disposed at a mounting position corresponding to the peripheral iron core body 13. The sleeve 19 is approximately in a hollow cylindrical shape. The sleeve 19 accommodates the central iron core body 12 and the plurality of peripheral iron core bodies 13. The sleeve 19 is in transition fit or interference fit with the central iron core body 12 and the plurality of peripheral iron core bodies 13. The sleeve 19 connects the central iron core body 12 and the plurality of peripheral iron core bodies 13 as a whole, to improve overall strength of the rotor 1, so that the rotor 1 can adapt to high-speed rotation. The sleeve 19 can prevent the stator 2 of the motor a from transferring heat to the rotor 1, to alleviate impact of a high temperature on magnetic properties of the rotor 1, thereby improving running performance of the motor a. The sleeve 19 may be made of one of materials of carbon fiber, steel, and alloy steel.

Each peripheral iron core body 13 and the central iron core body 12 are spaced apart from each other, to form a first separation gap 20a, a second separation gap 20b, and a third separation gap 20c that communicate with each other, and the third separation gap 20c is located between the first separation gap 20a and the second separation gap 20b. The first separation gap 20a and the second separation gap 20b form a first included angle 25 less than 180°, and the first included angle 25 faces the sleeve 19.

The first separation gap 20a is configured to accommodate a first permanent magnet 15, and the second separation gap 20b is configured to accommodate a second permanent magnet 16. The first permanent magnet 15 and the second permanent magnet 16 are respectively disposed in the first separation gap 20a and the second separation gap 20b, and are located on two sides of the third separation gap 20c. The first permanent magnet 15 and the second permanent magnet 16 are approximately arranged in a V-shaped manner (a V-shaped opening faces the sleeve 19), so that magnetomotive force generated by the motor a when the motor a is unloaded is closer to a sine wave, and harmonic content in magnetic flux density of the air gap 3 in the motor a can be reduced, thereby reducing iron loss of the motor a when the motor a is unloaded. The first permanent magnet 15 and the second permanent magnet 16 may be sintered neodymium ferroboron magnets.

In this embodiment provided in this application, an expression of the torque in the motor a is as follows:

$$T_e = \frac{3}{2} P_n i_q [i_d(L_d - L_q) + \varphi_f]$$

$T_e$ is a torque of the motor a, $P_n$ is a quantity of pole pairs, $i_q$ is a quadrature-axis current of the rotor 1, $i_d$ is a direct-axis current of the rotor 1, $L_d$ is a direct-axis inductance of the rotor 1, $L_q$ is a quadrature-axis inductance of the rotor 1, and $\varphi_f$ is a magnetic flux of the rotor 1.

It can be learned from the expression of the torque in the motor a that a larger difference between the direct-axis inductance and the quadrature-axis inductance indicates a larger torque of the motor a, a larger magnetic flux of the rotor 1, and a larger torque of the rotor 1.

The third separation gap 20c can isolate the first permanent magnet 15 from the second permanent magnet 16, to reduce magnetic leakage of the first permanent magnet 15 and the second permanent magnet 16. There is a first magnetic isolation gap 21 between the first permanent magnet 15 and the sleeve 19, and the first magnetic isolation gap 21 can reduce magnetic leakage of the first permanent magnet 15. There is a second magnetic isolation gap 22 between the second permanent magnet 16 and the sleeve 19, and the second magnetic isolation gap 22 can reduce magnetic leakage of the second permanent magnet 16. When the rotor 1 is used in the motor a, because the first permanent magnet 15 and the second permanent magnet 16 in the rotor 1 reduce magnetic leakage, a magnetic flux of the rotor 1 can be increased, so that magnetic flux density of a rotor 1 magnetic field generated by the rotor 1 is increased, and a rotation speed and a torque of the rotor 1 that are applied to the motor a can be further increased. Power of the motor a is equal to a product of the rotation speed of the rotor 1 and the torque of the rotor 1. The rotation speed of the rotor 1 in the motor a is increased, so that a maximum output power of the motor a is increased, and power density of the motor a is further increased. When the maximum output power of the motor a is controlled to remain unchanged, a size of the motor a can be designed to be smaller.

A width of the first separation gap 20a is less than or equal to a width of the first permanent magnet 15, so that the first permanent magnet 15 is in transition fit or interference fit with the first separation gap 20a, to fasten a position of the first permanent magnet 15 in the first separation gap 20a. A width of the second separation gap 20b is less than or equal to a width of the second permanent magnet 16, so that the second permanent magnet 16 is in transition fit or interference fit with the second separation gap 20b, to fasten a position of the second permanent magnet 16 in the second separation gap 20b. The widths of the first permanent magnet 15 and the second permanent magnet 16 may be equal, and the widths of the first separation gap 20a and the second separation gap 20b may be equal.

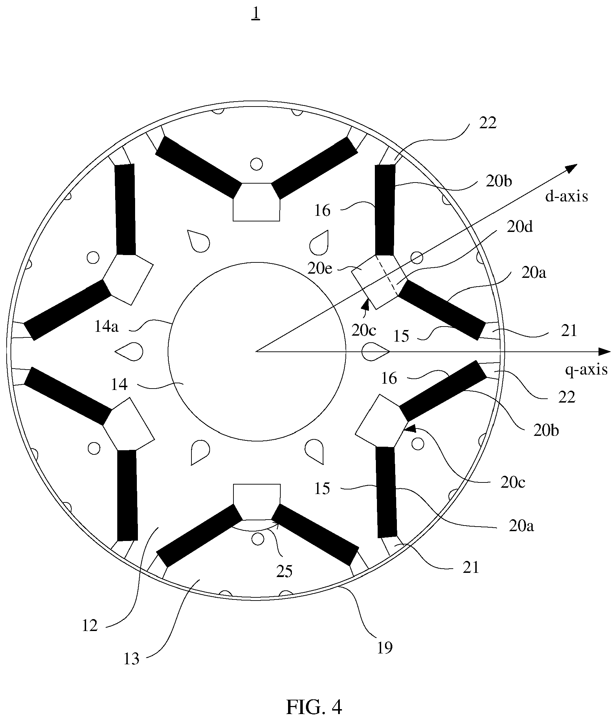

In some embodiments, with reference to FIG. 4 to FIG. 10, the third separation gap 20c includes a first area 20d and a second area 20e that communicate with each other. A rotor 1 axial cross-section in the first area 20d may be approximately in a shape of a trapezoid, and a rotor 1 axial cross-section in the second area 20e may be approximately in a shape of a rectangle or a square. The rotor 1 axial cross-sections of the first area 20d and the second area 20e may alternatively be in other shapes. A width of the first area 20d in a radial direction of the rotor 1 may be equal to the width of the first separation gap 20a and equal to the width of the second separation gap 20b.

A width of the third separation gap 20c in the radial direction of the rotor 1 is greater than the width of the first separation gap 20a and greater than the width of the second separation gap 20b. The width of the first separation gap 20a is a distance between an edge part that is of the central iron core body 12 and that is used as a boundary of the first separation gap 20a and an edge part that is of a peripheral iron core body 13 and that is used as a boundary of the first separation gap 20a. The width of the second separation gap 20b is a distance between an edge part that is of the central iron core body 12 and that is used as a boundary of the second separation gap 20b and an edge part that is of a peripheral iron core body 13 and that is used as a boundary of the second separation gap 20b.

Each peripheral iron core body 13 corresponds to a direct axis of the rotor 1, and each peripheral iron core body 13 is symmetrical about the corresponding direct axis. For the first separation gap 20a, the second separation gap 20b, and the third separation gap 20c that are formed through spacing between one peripheral iron core body and the central iron core body 12, the first separation gap 20a and the second separation gap 20b are symmetrical about the direct axis of the rotor 1, and the third separation gap 20c is symmetrical about the direct axis of the rotor 1. In addition, the first area 20d and the second area 20e are symmetrical about the direct axis, a direct-axis direction of the rotor 1 coincides with the radial direction of the rotor 1, and the direct axis of the rotor 1 is also referred to as a d axis.

For two adjacent peripheral iron core bodies 13, a quadrature axis of the rotor 1 is a symmetry line between the two adjacent peripheral iron core bodies 13, the quadrature axis of the rotor 1 coincides with the radial direction of the rotor 1, and the quadrature axis of the rotor 1 is also referred to as a q axis.

Each third separation gap 20c corresponds to one direct axis, each third separation gap 20c is at least partially located in an area in which the corresponding direct axis is used as a symmetry line, and an electrical angle of the rotor 1 in the area is between 40° and 80°.

Because each third separation gap 20c is at least partially located in the area in which the corresponding direct axis is used as the symmetry line, and the third separation gap 20c is close to the corresponding direct axis, the third separation gap 20c can increase magnetic resistance of the corresponding direct axis (larger magnetic resistance of the direct axis indicates a smaller inductance of the direct axis), to increase a magnetic resistance difference between the direct axis and the quadrature axis in the rotor 1, thereby further increasing the torque of the motor a. The third separation gap 20c can further reduce magnetic leakage of the first permanent magnet 15 and the second permanent magnet 16, increase the magnetic flux of the rotor 1, and further increase the torque of the motor a.

The third separation gap 20c can further be used as a channel for cooling oil flowing in the rotor 1, to reduce flow resistance of cooling oil flowing in the rotor 1, to increase an oil flux of cooling oil flowing in the rotor 1, thereby further improving the effect of cooling the rotor 1 by the cooling oil.

A notch 139 is provided at an edge that is of each peripheral iron core body 13 and that is close to the sleeve 19. There may be a plurality of notches 139. Areas of the plurality of notches 139 are distributed at the edge that is of the peripheral iron core body 13 and that is close to the sleeve 19. The notch 139 is configured to reduce harmonic content in the magnetic flux density of the air gap 3 of the motor a, and reduce noise generated when the motor a is started.

Each peripheral iron core body 13 is provided with a positioning through hole 139a in the axial direction of the rotor 1, and the positioning through hole 139a is configured to locate a position at which the peripheral iron core body 13 is located in the rotor 1. For example, a positioning pin runs through the positioning through hole 139a, to locate the position at which the peripheral iron core body 13 is located in the rotor 1.

In this embodiment of this application, each peripheral iron core body 13 is provided with at least one axis-symmetrical slot 130 in the radial direction of the rotor 1. The at least one slot 130 is configured to accommodate at least one permanent magnet, and the at least one permanent magnet is spaced apart from an end wall of the slot or the sleeve. In this embodiment of this application, the slot 130 of the peripheral iron core body 13 includes a plurality of structures such as I-shaped and V-shaped structures.

With reference to FIG. 4 to FIG. 6, the rotor 1 may be of a single-V-shaped topology structure.

In a possible implementation, with reference to FIG. 4, the second area 20e includes a notch 139 area formed through recessing of the central iron core body 12 toward the shaft hole 14a.

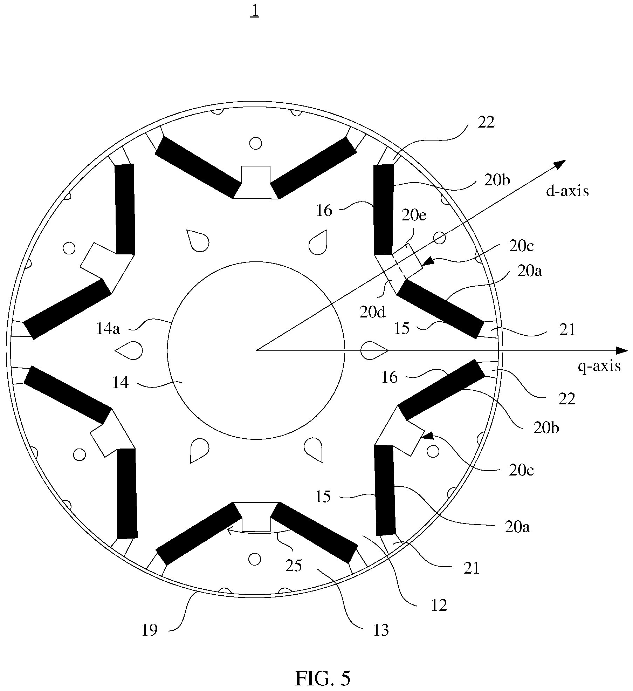

In a possible implementation, with reference to FIG. 5, the second area 20e includes a notch 139 area formed through recessing of the peripheral iron core body 13 toward the sleeve 19.

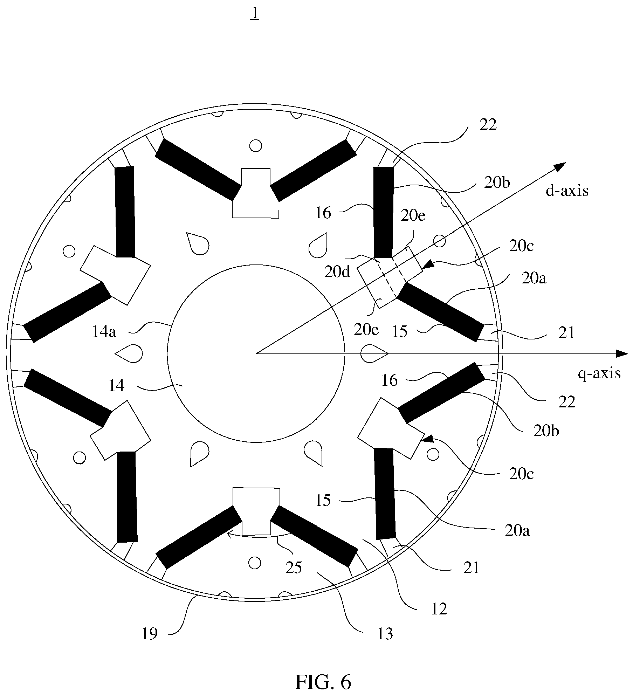

In a possible implementation, with reference to FIG. 6, the second area 20e includes a notch 139 area formed through recessing of the central iron core body 12 toward the shaft hole 14a and a notch 139 area formed through recessing of the peripheral iron core body 13 toward the sleeve 19.

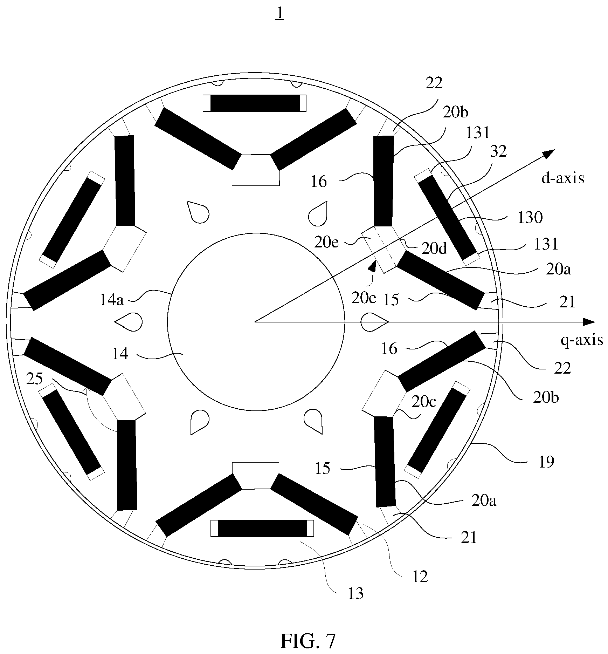

The rotor 1 may be of a V-plus-I-shaped topology structure, and each peripheral iron core body 13 may be further provided with an axis-symmetrical slot 130. With reference to FIG. 7, a rotor 1 axial cross-section of the slot 130 may be of an I shape, a length direction of the rotor 1 axial cross-section of the slot 130 is perpendicular to an axis-symmetry line, and the axis-symmetry line of the slot 130 coincides with the radial direction of the rotor 1.

The slot 130 is configured to accommodate a permanent magnet 32. The permanent magnet 32 is disposed at a middle position of the slot 130, and the permanent magnet 32 is in transition fit or interference fit with the slot 130. Two magnetic isolation slots 131 are separately formed between the permanent magnet 32 and end walls on two ends of the slot 130. The magnetic isolation slot 131 is configured to reduce magnetic leakage of the permanent magnet 32, to increase a magnetic flux of the rotor 1, so that when the motor a runs, the torque and the rotation speed of the rotor 1 can be increased.

The slot 130 corresponds to the third separation gap 20c formed through spacing between the peripheral iron core body 13 in which the slot 130 is located and the central iron core body 12, and the slot 130 and the corresponding third separation gap 20c are arranged in the radial direction of the rotor 1. A length of the permanent magnet 32 in the slot 130 along the rotor 1 axial cross-section is greater than a length of the third separation gap 20c along the rotor 1 axial cross-section, so that magnetomotive force generated by the rotor 1 of the V-plus-I-shaped topology structure is closer to a sine wave, and harmonic content in the magnetic flux density of the air gap 3 can be reduced, thereby reducing iron loss of the motor a when the motor a is unloaded.

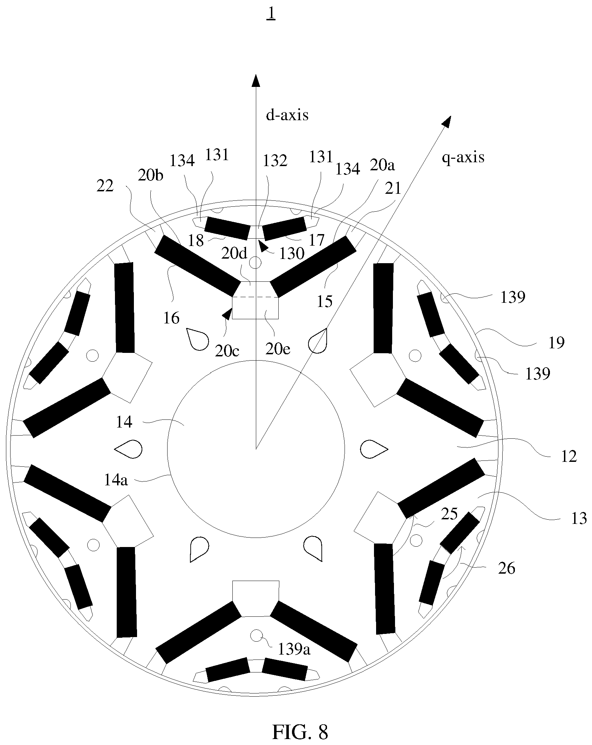

The rotor 1 may alternatively be of a dual-V-shaped topology structure. With reference to FIG. 8, the slot 130 is configured to accommodate a third permanent magnet 17 and a fourth permanent magnet 18, and a rotor 1 axial cross-section of the slot 130 is approximately V-shaped. The third permanent magnet 17 and the fourth permanent magnet 18 are spaced apart to form a magnetic isolation gap 132, and the magnetic isolation gap 132 may be parallel to the third separation gap 20c. The third permanent magnet 17 and the fourth permanent magnet 18 form a second included angle 26 that is less than 180° and that faces the sleeve 19, and the second included angle 26 is greater than the first included angle 25. The first permanent magnet 15, the second permanent magnet 16, the third permanent magnet 17, and the fourth permanent magnet 18 approximately form a double-V-shaped topology structure, and the rotor 1 of the double-V-shaped topology structure can generate a magnetic field of the rotor 1 with relatively high magnetic flux density. When the rotor 1 is used in the motor a, magnetomotive force generated by the rotor 1 of the dual-V-shaped topology structure is closer to a sine wave, so that harmonic content in the magnetic flux density of the air gap 3 can be reduced, thereby reducing iron loss of the motor a when the motor a is unloaded.

When the third permanent magnet 17 is mounted, the third permanent magnet 17 is mounted in the slot 130 in manners such as potting, elastic pressing, and injection molding, and the third permanent magnet 17 is in transition fit or interference fit with the slot 130. When the fourth permanent magnet 18 is mounted, the fourth permanent magnet 18 is mounted in the slot 130 in manners such as potting, elastic pressing, and injection molding, and the fourth permanent magnet 18 is in transition fit or interference fit with the slot 130. The third permanent magnet 17 and the third permanent magnet 17 are spaced apart to form a magnetic isolation gap 132, and the magnetic isolation gap 132 can reduce magnetic leakage of the third permanent magnet 17 and the fourth permanent magnet 18.

The third permanent magnet 17 in each peripheral iron core body 13 is spaced apart from one end wall of the slot 130 to form a magnetic isolation slot 131 configured to reduce magnetic leakage of the third permanent magnet 17, and the fourth permanent magnet 18 of each peripheral iron core body 13 is spaced apart from one end wall of the slot 130 to form a magnetic isolation slot 131 configured to reduce magnetic leakage of the fourth permanent magnet 18. The third permanent magnet 17 and the fourth permanent magnet 18 are spaced apart to form a magnetic isolation gap 132.

Two end walls of the slot 130 that accommodates the third permanent magnet 17 form two magnetic bridges 134 respectively with edges that are of the peripheral iron core body 13 in which the slot 130 is located and that are close to the sleeve 19. For example, if a material of the peripheral iron core body 13 is silicon steel, silicon steel that is reserved in the peripheral iron core body 13 and that is between the two end walls of the slot 130 and the edges that are of the peripheral iron core body 13 and that are close to the sleeve 19 is two magnetic bridges 134, and distances between the edges that are of the peripheral iron core body 13 and that are close to the sleeve 19 and the two end walls of the slot 130 are respectively thicknesses of the two magnetic bridges 134. Existence of the magnetic bridge 134 can enable the peripheral iron core body 13 to be of an integral structure, and the peripheral iron core body 13 can be integrally formed, so as to facilitate processing of the peripheral iron core body 13.

A thickness of the magnetic bridge 134 can affect strength of the peripheral iron core body 13. A thicker magnetic bridge 134 indicates higher strength of the peripheral iron core body 13, and overall strength of the rotor 1 can be increased, so that strength of the rotor 1 can adapt to high-speed rotation.

The thickness of the magnetic bridge 134 can affect magnetic flux density of a rotor magnetic field generated by the rotor 1. A thinner magnetic bridge 134 indicates easier saturation of a magnetic flux of the magnetic bridge 134, and better effect of limiting magnetic leakage of the third permanent magnet 17 and the fourth permanent magnet 18 by the magnetic bridge 134.

The thickness of the magnetic bridge 134 of the peripheral iron core body 13 is between 1 mm and 3 mm. Because the peripheral iron core body 13 and the central iron core body 12 are disposed separately, an overall size of the peripheral iron core body 13 is small. The thickness of the magnetic bridge 134 is set between 1 mm and 3 mm (which is thinner than a general magnetic bridge), and the magnetic bridge 134 can be used as a strength support of the peripheral iron core body 13, so that the rotor 1 can adapt to high-speed rotation, and the magnetic bridge 134 in the peripheral iron core body 13 can further effectively limit magnetic leakage of the third permanent magnet 17 and the fourth permanent magnet 18.

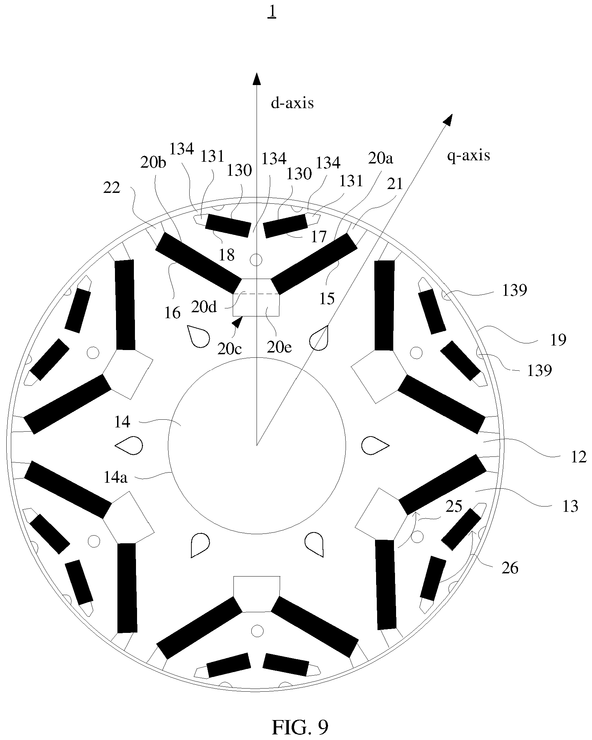

An embodiment of this application further provides a rotor 1 of a dual-V-shaped topology structure. With reference to FIG. 9, each peripheral iron core body 13 is provided with two slots 130 spaced apart from each other, and the two slots 130 respectively accommodate the third permanent magnet 17 and the fourth permanent magnet 18. The third permanent magnet 17 in each peripheral iron core body 13 is spaced apart from an end wall that is of the slot 130 in which the third permanent magnet 17 is located and that is close to the sleeve 19 to form a magnetic isolation slot 131 configured to reduce magnetic leakage of the third permanent magnet 17, and the fourth permanent magnet 18 in each peripheral iron core body 13 is spaced apart from an end wall that is of the slot 130 in which the fourth permanent magnet 18 is located and that is close to the sleeve 19 to form a magnetic isolation slot 131 configured to reduce magnetic leakage of the fourth permanent magnet 18. A magnetic bridge 134 is reserved between two end walls that are in the two slots 130 and that are close to each other. If the material of the peripheral iron core body 13 is silicon steel, silicon steel that is in the peripheral iron core body 13 and that is reserved between the end walls that are in the two slots 130 and that are close to each other is the magnetic bridge 134. The thickness of the magnetic bridge 134 is a distance between two slot walls that are in the two slots 130 and that are close to each other, and the thickness of the magnetic bridge 134 is between 4 mm and 5 mm. Existence of the magnetic bridge 134 can enable the peripheral iron core body 13 to be of an integral structure, so that overall strength of the peripheral iron core body 13 can be increased, thereby facilitating integral forming of the peripheral iron core body 13.

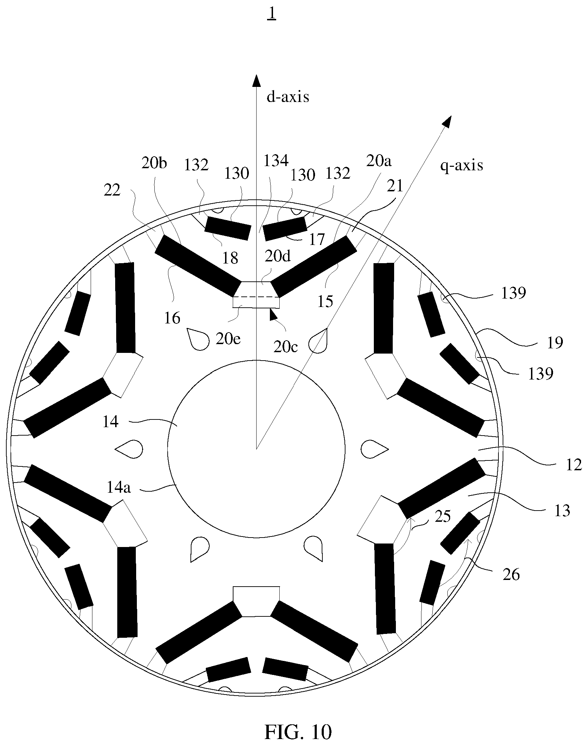

An embodiment of this application further provides a rotor 1 of a dual-V-shaped topology structure. With reference to FIG. 10, each peripheral iron core body 13 is provided with two slots 130 spaced apart from each other, and the two slots 130 respectively accommodate the third permanent magnet 17 and the fourth permanent magnet 18. The third permanent magnet 17 in each peripheral iron core body 13 is spaced apart from the sleeve 19 to form a magnetic isolation gap 132 configured to reduce magnetic leakage of the third permanent magnet 17, and the fourth permanent magnet 18 in each peripheral iron core body 13 is spaced apart from the sleeve 19 to form a magnetic isolation gap 132 configured to reduce magnetic leakage of the fourth permanent magnet 18. A magnetic bridge 134 is reserved between two end walls that are in two slots 130 and that are close to each other. Existence of the magnetic bridge 134 can enable the peripheral iron core body 13 to be of an integral structure, and help increase overall strength of the peripheral iron core body 13, so as to facilitate integral forming of the peripheral iron core body 13.

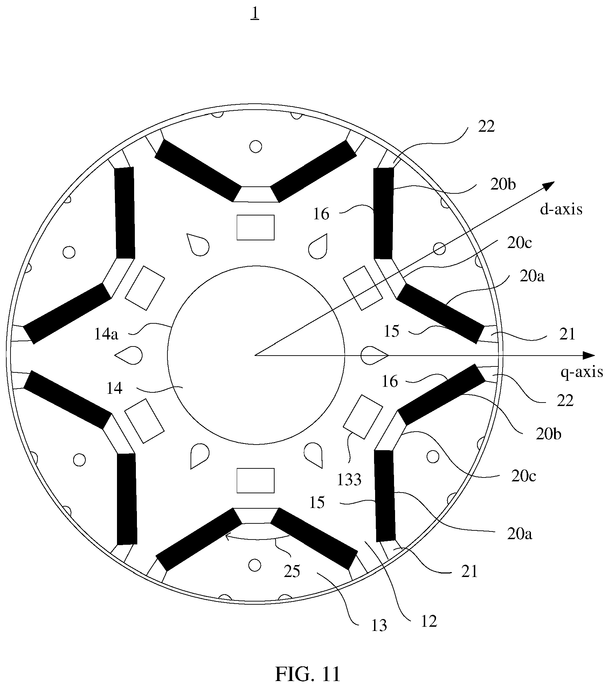

In some embodiments, with reference to FIG. 11 to FIG. 21, the rotor 1 may further include a plurality of magnetoresistive holes 133, and a quantity of the plurality of magnetoresistive holes 133 is equal to a quantity of the plurality of third separation gaps 20c. The magnetoresistive hole 133 and the third separation gap 20c corresponding to the magnetoresistive hole 133 are arranged in the radial direction of the rotor 1, and each magnetoresistive hole 133 and the third separation gap 20c corresponding to the magnetoresistive hole 133 are symmetrical about the direct axis of the rotor 1, and the direct axis coincides with the radial direction of the rotor 1. A rotor 1 axial cross-section of each magnetoresistive hole 133 may be in a shape of a rectangle or a square. Each magnetoresistive hole 133 corresponds to one direct axis of the rotor 1. Each magnetoresistive hole 133 is at least partially located in an area in which the corresponding direct axis is used as a symmetry line, to increase magnetic resistance of the direct axis corresponding to each magnetoresistive hole 133, so as to further increase a magnetic resistance difference between each direct axis of the rotor 1 and each quadrature axis of the rotor 1, thereby further increasing the torque of the rotor 1.

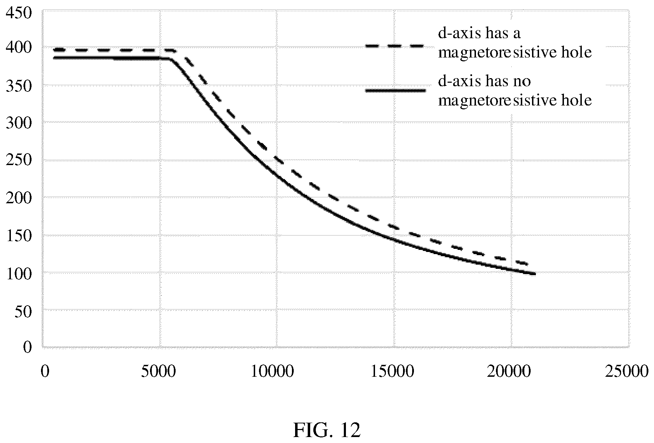

FIG. 12 is a comparison diagram of a magnetoresistive hole 133 and magnetic resistance in a rotor 1, where a horizontal coordinate is the rotation speed of the rotor 1, and a vertical coordinate is the torque of the rotor 1.

The magnetoresistive hole 133 may communicate with a channel for cooling oil flowing in the rotor 1, and the magnetoresistive hole 133 can be configured to reduce flow resistance of cooling oil flowing in the channel, so as to improve cooling efficiency of the rotor 1.

The magnetoresistive hole 133 is provided in the rotor 1, so that overall weight of the rotor 1 can be reduced, to increase power density of the rotor 1.

In a possible implementation, an embodiment of this application provides another single-V-shaped topology structure. With reference to FIG. 11, a plurality of magnetoresistive holes 133 are evenly provided in a circumferential direction of the central iron core body 12, and each magnetoresistive hole 133 is located between the shaft hole 14a and the third separation gap 20c corresponding to the magnetoresistive hole 133.

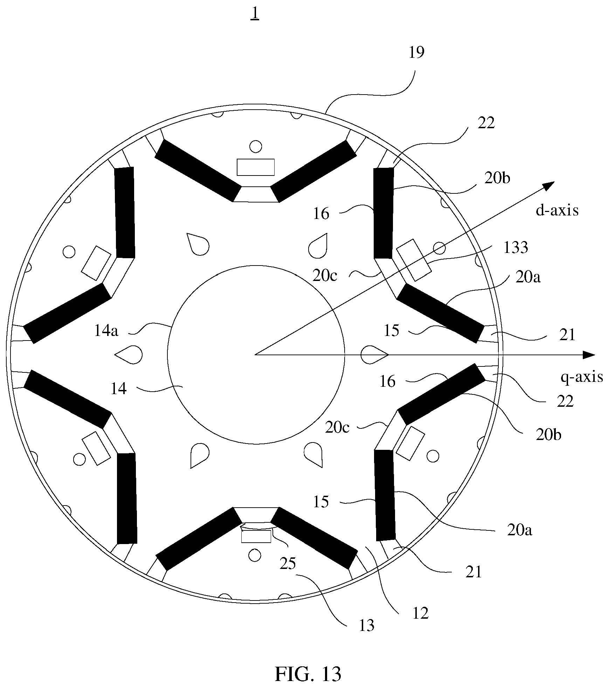

In a possible implementation, with reference to FIG. 13, the plurality of magnetoresistive holes 133 are respectively disposed on the plurality of peripheral iron core bodies 13, and each magnetoresistive hole 133 is located between the third separation gap 20c corresponding to the magnetoresistive hole 133 and the sleeve 19.

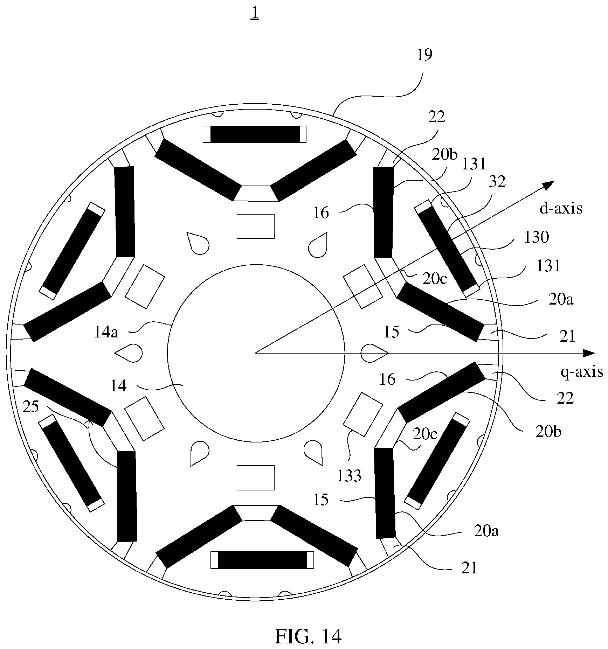

In a possible implementation, this application further provides a V-plus-I-typed topology structure in another form. With reference to FIG. 14 to FIG. 16, each peripheral iron core body 13 is provided with the slot 130, a rotor 1 axial cross-section of the slot 130 may be of an I shape, a length direction of the rotor 1 axial cross-section of the slot 130 is perpendicular to an axis-symmetry line, and the axis-symmetry line of the slot 130 coincides with the radial direction of the rotor 1. The slot 130 is configured to accommodate a permanent magnet 32. The permanent magnet 32 is disposed at a middle position of the slot 130, and two magnetic isolation slots 131 are separately formed between the permanent magnet 32 and end walls on two ends of the slot 130.

With reference to FIG. 14, the plurality of magnetoresistive holes 133 are evenly distributed in the circumferential direction of the central iron core body 12, and each magnetoresistive hole 133 is disposed between the corresponding third separation gap 20c and the shaft hole 14a.

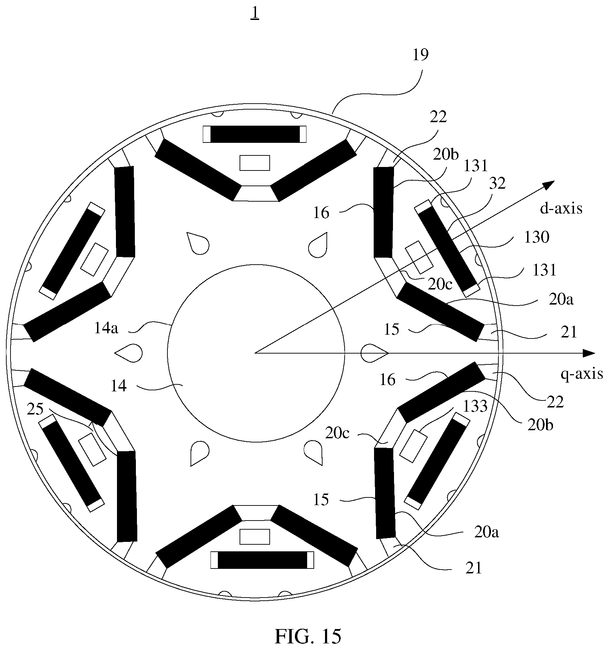

With reference to FIG. 15, the plurality of magnetoresistive holes 133 are respectively disposed in the plurality of peripheral iron core bodies 13, one magnetoresistive hole 133 is provided in each peripheral iron core body 13, and the magnetoresistive hole 133 is located between the corresponding third separation gap 20c and the slot 130.

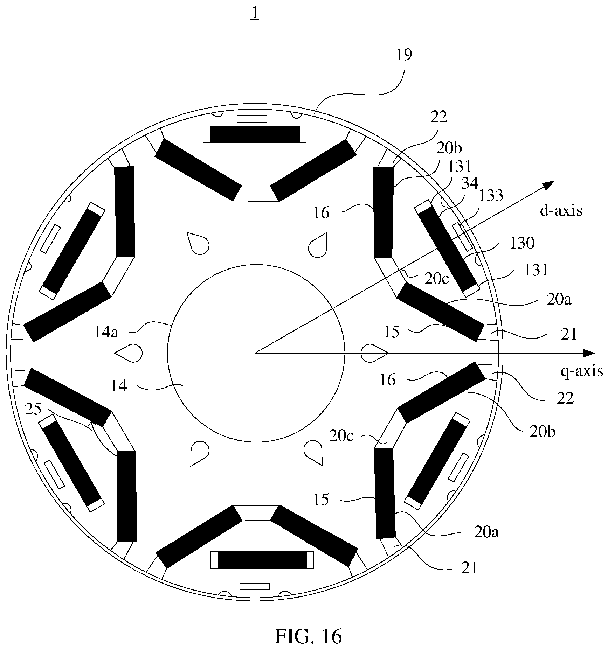

With reference to FIG. 16, the plurality of magnetoresistive holes 133 are respectively disposed in the plurality of peripheral iron core bodies 13, one magnetoresistive hole 133 is provided in each peripheral iron core body 13, and the magnetoresistive hole 133 is located between the slot 130 of the peripheral iron core body 13 in which the magnetoresistive hole 133 is located and the sleeve 19.

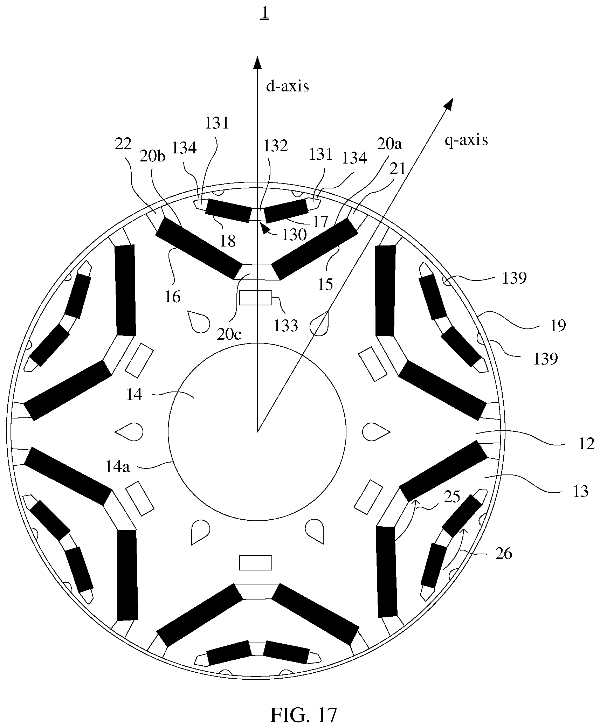

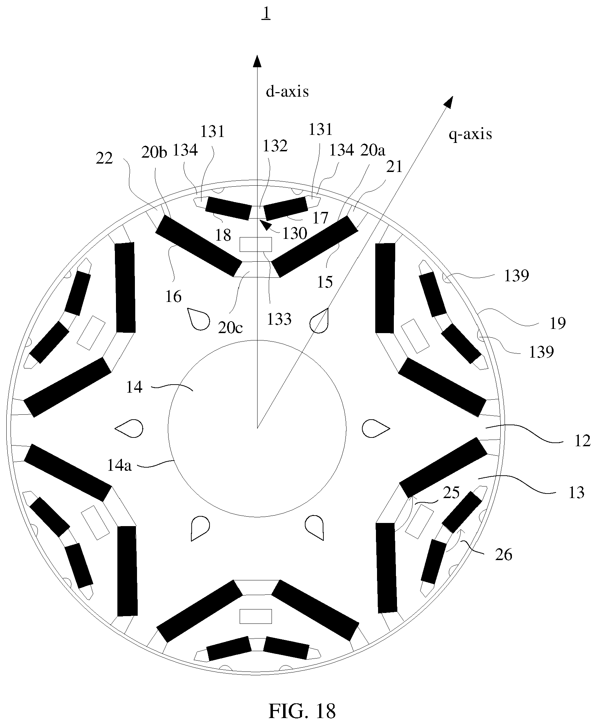

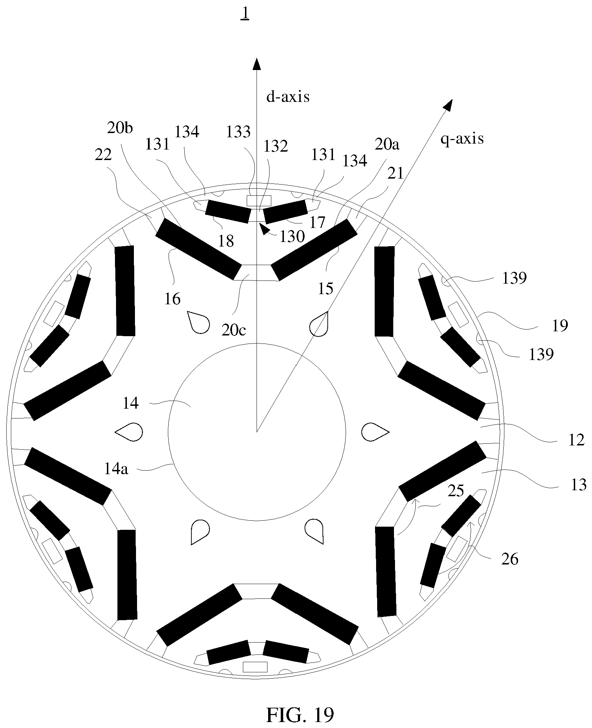

In a possible implementation, this application further provides another rotor 1 with a dual-V-shaped topology structure. With reference to FIG. 17, different from the rotor 1 with the dual-V-shaped topology structure in FIG. 8, a plurality of magnetoresistive holes 133 are provided in the peripheral iron core body 13, the plurality of magnetoresistive holes 133 are evenly distributed in the circumferential direction of the central iron core body 12, and each magnetoresistive hole 133 is provided between the corresponding third separation gap 20c and the shaft hole 14a. With reference to FIG. 18, different from the rotor 1 of the dual-V-shaped topology structure in FIG. 8, a plurality of magnetoresistive holes 133 are respectively provided on the plurality of peripheral iron core bodies 13, and each magnetoresistive hole 133 is provided between the corresponding third separation gap 20c and the slot 130 of the peripheral iron core body 13 in which the magnetoresistive hole 133 is located. With reference to FIG. 19, different from the rotor 1 of the dual-V-shaped topology structure in FIG. 8, each magnetoresistive hole 133 is separately disposed on the plurality of peripheral iron core bodies 13, and each magnetoresistive hole 133 is provided between the slot 130 of the peripheral iron core body 13 in which the magnetoresistive hole 133 is located and the sleeve 19. In the rotor 1 shown in FIG. 17 to FIG. 19, a width of the third separation gap 20c in the radial direction of the rotor 1 may be less than or equal to a width of the first separation gap 20a, and a width of the third separation gap 20c in the radial direction of the rotor 1 may be less than or equal to a width of the second separation gap 20b.

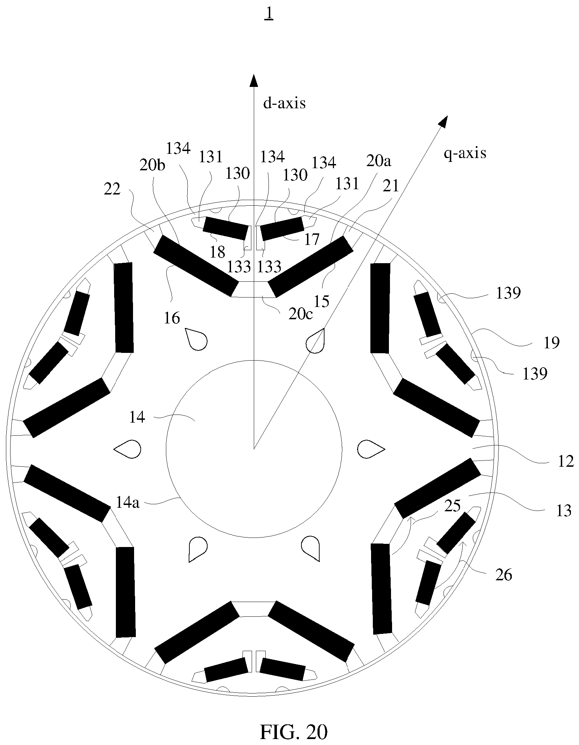

In some embodiments, this application further discloses still another rotor 1 of a dual-V-shaped topology structure according to an embodiment. With reference to FIG. 20, different from the rotor 1 of the dual-V-shaped topology in FIG. 8, each peripheral iron core body 13 is provided with two slots 130, the two slots 130 respectively accommodate the first permanent magnet 15 and the second permanent magnet 16, the first permanent magnet 15 is spaced apart from an end wall that is of the slot 130 in which the first permanent magnet 15 is located and that is close to the sleeve 19 to form a magnetic isolation slot 131, and the second permanent magnet 16 is spaced apart from an end wall that is of the slot 130 in which the second permanent magnet 16 is located and that is close to the sleeve 19 to form a magnetic isolation slot 131.

With reference to FIG. 20, each peripheral iron core body 13 is further provided with two magnetoresistive holes 133. The two magnetoresistive holes 133 are spaced apart and separately communicate with one slot 130. Widths of the two magnetoresistive holes 133 in the radial direction of the rotor 1 are respectively greater than widths of the slots 130 communicating with the two magnetoresistive holes 133.

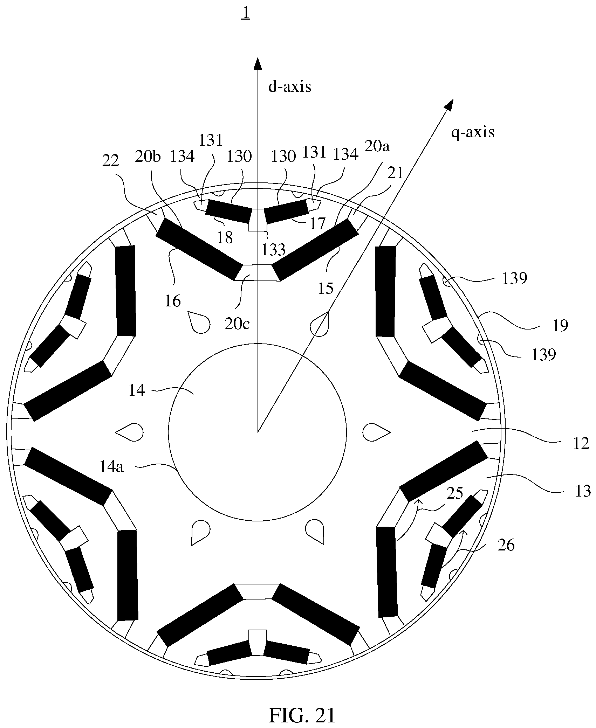

With reference to FIG. 21, different from the rotor 1 in FIG. 21, the two magnetoresistive holes 133 communicate with each other.

It should be noted that, all directional indications (for example, up, down, left, right, front, and back) in embodiments of this application are merely used to explain a relative position relationship, a motion status, and the like between components in a specific posture (as shown in the accompanying drawings). If the specific posture changes, the directional indication also changes accordingly.

In addition, descriptions of "first", "second", and the like in this application are merely intended for a purpose of description, and shall not be understood as an indication or implication of relative importance of the descriptions or an implicit indication of a quantity of indicated technical features. Therefore, a feature limited by "first" or "second" may explicitly or implicitly include at least one of the features. In the descriptions of this application, "a plurality of" means at least two, for example, two or three, unless otherwise clearly limited.

In this application, unless otherwise specified and limited, terms "connection", "fixed", and the like should be understood in a broad sense. For example, "fixed" may indicate a fixed connection, a detachable connection, or an integrated connection; may indicate a mechanical connection, or may indicate an electrical connection; may indicate a direct connection, or may indicate an indirect connection by using an intermediate medium, or may indicate a connection inside two elements or an interaction relationship between two elements, unless otherwise specified. A person of ordinary skill in the art may understand specific meanings of the foregoing terms in this application based on specific situations.

In addition, the technical solutions in embodiments of this application may be combined with each other, but need to be implemented by a person of ordinary skill in the art. When combinations of the technical solutions conflict with each other or cannot be implemented, it should be considered that the combination of the technical solutions does not exist, and does not fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A motor, wherein the motor comprises a rotor and a stator, the rotor is disposed in the stator and is spaced apart from the stator to form an air gap, the rotor comprises a central iron core body, a plurality of peripheral iron core bodies, and a sleeve, and the plurality of peripheral iron core bodies and the central iron core body are fixedly accommodated in the sleeve, wherein

the central iron core body comprises a shaft hole that is provided in an axial direction and a plurality of mounting positions distributed in a circumferential direction of the central iron core body, the plurality of peripheral iron core bodies are in a one-to-one correspondence with the plurality of mounting positions, and each peripheral iron core body is disposed at a corresponding mounting position; and

each peripheral iron core body and the central iron core body are spaced apart to form a first separation gap, a second separation gap, and a third separation gap that communicate with each other, the first separation gap and the second separation gap form a first included angle less than 180° toward the sleeve and are respectively configured to accommodate a first permanent magnet and a second permanent magnet, the first permanent magnet and the second permanent magnet are disposed on two sides of the third separation gap, the first permanent magnet and the second permanent magnet are separately spaced apart from the sleeve to form a first magnetic isolation gap and a second magnetic isolation gap, and the third separation gap comprises:

a first area, wherein a width of the first area in a radial direction of the rotor is equal to a width of the first separation gap or the second separation gap; and

a second area, wherein the second area comprises at least one of a notch area formed through recessing of the peripheral iron core body toward the sleeve, and a notch area formed through recessing of the central iron core body toward the shaft hole.

2. The motor according to claim 1, wherein a rotor axial cross-sectional shape of the first area is a trapezoid, and a rotor axial cross-sectional shape of the second area is a rectangle or a square.

3. The motor according to claim 2, wherein each peripheral iron core body, each first area, and each second area are axis-symmetrical in the radial direction of the rotor.

4. The motor according to any one of claims 1 to 3, wherein each peripheral iron core body is provided with at least one axis-symmetrical slot, the at least one slot is configured to accommodate at least one permanent magnet, and the at least one permanent magnet is spaced apart from an end wall of the slot to form at least one magnetic isolation slot, or the at least one permanent magnet is spaced apart from the sleeve to form at least one magnetic isolation gap.

5. A motor, wherein the motor comprises a rotor and a stator, the rotor is disposed in the stator and is spaced apart from the stator to form an air gap, the rotor comprises a central iron core body, a plurality of peripheral iron core bodies, and a sleeve, and the plurality of peripheral iron core bodies and the central iron core body are fixedly accommodated in the sleeve, wherein

the central iron core body comprises a shaft hole that is provided in an axial direction and a plurality of mounting positions distributed in a circumferential direction of the central iron core body, the plurality of peripheral iron core bodies are in a one-to-one correspondence with the plurality of mounting positions, and each peripheral iron core body is disposed at a corresponding mounting position;

each peripheral iron core body and the central iron core body are spaced apart to form a first separation gap, a second separation gap, and a third separation gap that communicate with each other, the first separation gap and the second separation gap form a first included angle less than 180° toward the sleeve and are respectively configured to accommodate a first permanent magnet and a second permanent magnet, the first permanent magnet and the second permanent magnet are disposed on two sides of the third separation gap, and the first permanent magnet and the second permanent magnet are separately spaced apart from the sleeve to form a first magnetic isolation gap and a second magnetic isolation gap; and

a plurality of magnetoresistive holes, wherein a quantity of the magnetoresistive holes is the same as a quantity of third separation gaps, and the plurality of magnetoresistive holes are evenly disposed in the circumferential direction of the central iron core body, or the plurality of magnetoresistive holes are respectively disposed on the plurality of peripheral iron core bodies.

6. The motor according to claim 5, wherein each magnetoresistive hole and a third separation gap corresponding to the magnetoresistive hole are arranged in a radial direction of the rotor, and each magnetoresistive hole and the third separation gap corresponding to the magnetoresistive hole are axis-symmetrical in the radial direction of the rotor.

7. The motor according to claim 5 or 6, wherein a rotor axial cross-sectional shape of each magnetoresistive hole is the same and is a rectangle or a square.

8. The motor according to any one of claims 5 to 7, wherein each peripheral iron core body is provided with at least one axis-symmetrical slot, and the at least one slot is configured to accommodate at least one permanent magnet; the at least one permanent magnet is spaced apart from an end wall of the slot to form at least one magnetic isolation slot, or the at least one permanent magnet is spaced apart from the sleeve to form a magnetic isolation gap; and the magnetoresistive hole of each peripheral iron core body is provided between the slot and the third separation gap, or the magnetoresistive hole of each peripheral iron core body is provided between the slot and the sleeve.

9. A motor, wherein the motor comprises a rotor and a stator, the rotor is disposed in the stator and is spaced apart from the stator to form an air gap, the rotor comprises a central iron core body, a plurality of peripheral iron core bodies, and a sleeve, and the plurality of peripheral iron core bodies and the central iron core body are fixedly accommodated in the sleeve, wherein

the central iron core body comprises a shaft hole that is provided in an axial direction and a plurality of mounting positions distributed in a circumferential direction of the central iron core body, the plurality of peripheral iron core bodies are in a one-to-one correspondence with the plurality of mounting positions, and each peripheral iron core body is disposed at a corresponding mounting position;

each peripheral iron core body and the central iron core body are spaced apart to form a first separation gap, a second separation gap, and a third separation gap that communicate with each other, the first separation gap and the second separation gap form a first included angle less than 180° toward the sleeve and are respectively configured to accommodate a first permanent magnet and a second permanent magnet, the first permanent magnet and the second permanent magnet are disposed on two sides of the third separation gap, and the first permanent magnet and the second permanent magnet are separately spaced apart from the sleeve to form a first magnetic isolation gap and a second magnetic isolation gap; and

each peripheral iron core body is provided with at least one axis-symmetrical slot in a radial direction of the rotor, the at least one slot is configured to accommodate at least one permanent magnet, and the at least one permanent magnet is spaced apart from an end wall of the slot or the sleeve.

10. The motor according to claim 9, wherein the slot is configured to accommodate a third permanent magnet and a fourth permanent magnet, the third permanent magnet and the fourth permanent magnet are separately spaced apart from the sleeve to form a magnetic isolation gap, or the third permanent magnet and the fourth permanent magnet are separately spaced apart from an end wall of the slot in which the third permanent magnet and the fourth permanent magnet are located to form a magnetic isolation slot, and the third permanent magnet and the fourth permanent magnet are spaced apart from each other to form a magnetic isolation gap.

11. The motor according to claim 9, wherein each peripheral iron core body is provided with two slots, the two slots are axis-symmetrical in the radial direction of the rotor, the two slots are respectively configured to accommodate a third permanent magnet and a fourth permanent magnet, and the third permanent magnet and the fourth permanent magnet are separately spaced apart from the sleeve to form a magnetic isolation gap, or the third permanent magnet and the fourth permanent magnet are respectively spaced apart from end walls of the slots in which the third permanent magnet and the fourth permanent magnet are located to form a magnetic isolation slot.

12. The motor according to any one of claims 9 to 11, wherein each peripheral iron core body is provided with one magnetoresistive hole, and the magnetoresistive hole of each peripheral iron core body is provided between the slot and the third separation gap, or the magnetoresistive hole of each peripheral iron core body is provided between the slot and the sleeve.

**13.** The motor according to claim 9, wherein each peripheral iron core body is provided with two slots and two magnetoresistive holes, the two slots are axis-symmetrical in the radial direction of the rotor, the two slots are respectively configured to accommodate a third permanent magnet and a fourth permanent magnet, the sleeve is separately spaced apart from the third permanent magnet and the fourth permanent magnet to form a magnetic isolation gap, or an end wall on one end of each of the two slots is separately spaced apart from the third permanent magnet and the fourth permanent magnet to form a magnetic isolation slot, and an end wall on the other end of each of the two slots separately communicates with the two magnetoresistive holes, and widths of the two magnetoresistive holes in the radial direction of the rotor are both greater than widths of the two slots.

**14.** The motor according to claim 13, wherein the two magnetoresistive holes communicate with each other.

**15.** A vehicle, wherein the vehicle comprises a frame and the motor according to any one of claims 1 to 14, and the motor is mounted to the frame.

FIG. 1

FIG. 2

FIG. 3

FIG. 4

1

FIG. 5

FIG. 6

FIG. 7

FIG. 8

FIG. 9

FIG. 10

1

FIG. 11

FIG. 12

FIG. 13

1

FIG. 14

FIG. 15

FIG. 16

FIG. 17

FIG. 18

FIG. 19

FIG. 20

FIG. 21

## INTERNATIONAL SEARCH REPORT

| International application No. |
| --- |
| **PCT/CN2022/128457** |

### A. CLASSIFICATION OF SUBJECT MATTER

H02K1/27(2022.01)i; H02K1/22(2006.01)i

According to International Patent Classification (IPC) or to both national classification and IPC

### B. FIELDS SEARCHED

Minimum documentation searched (classification system followed by classification symbols)

IPC: H02K

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; USTXT; WOTXT; EPTXT: 华为, 套筒, 转子, 磁钢, 磁铁, 永磁, 隔磁, 磁阻, 间隙, 气隙, 空气, 离心力, sleeve, rotor, permanent magnet, magnetic isolation, reluctance, air, gap

### C. DOCUMENTS CONSIDERED TO BE RELEVANT

| Category* | Citation of document, with indication, where appropriate, of the relevant passages | Relevant to claim No. |
| --- | --- | --- |
| X | CN 114498977 A (SHANGHAI HUAWEI DIGITAL ENERGY TECHNOLOGY CO., LTD.) 13 May 2022 (2022-05-13) description, paragraphs [0057]-[0119], and figures 1-21 | 9-15 |
| Y | CN 114498977 A (SHANGHAI HUAWEI DIGITAL ENERGY TECHNOLOGY CO., LTD.) 13 May 2022 (2022-05-13) description, paragraphs [0057]-[0119], and figures 1-21 | 1-8 |
| Y | CN 103404001 A (MITSUBISHI HEAVY INDUSTRIES AUTOMOTIVE THERMAL SYSTEMS CO., LTD.) 20 November 2013 (2013-11-20) description, paragraphs [0043]-[0079], and figures 1-7 | 1-8 |
| Y | CN 105162301 A (CHANGZHOU PUSHU AUTOMOBILE ELECTRICAL SYSTEM CO., LTD.) 16 December 2015 (2015-12-16) description, paragraphs [0038]-[0050], and figures 1-12 | 1-4 |
| Y | CN 110011444 A (GREE GREEN REFRIGERATION TECHNOLOGY CENTER CO., LTD. OF ZHUHAI) 12 July 2019 (2019-07-12) description, paragraphs [0045]-[0067], and figures 1-9 | 5-7 |

☑ Further documents are listed in the continuation of Box C. ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **17 May 2023** | **14 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2022/128457** |

**C.    DOCUMENTS CONSIDERED TO BE RELEVANT**

| Category* | Citation of document, with indication, where appropriate, of the relevant passages | Relevant to claim No. |
|---|---|---|
| A | CN 217216133 U (GUANGZHOU XPENG MOTORS TECHNOLOGY CO., LTD.) 16 August 2022 (2022-08-16) <br> description, paragraphs [0024]-[0042], and figures 1-5 | 1-15 |

Form PCT/ISA/210 (second sheet) (July 2022)

**EP 4 607 761 A1**

**INTERNATIONAL SEARCH REPORT**
Information on patent family members

International application No.

**PCT/CN2022/128457**

| Patent document cited in search report | | | Publication date (day/month/year) | Patent family member(s) | | | Publication date (day/month/year) |
|---|---|---|---|---|---|---|---|
| CN | 114498977 | A | 13 May 2022 | None | | | |
| CN | 103404001 | A | 20 November 2013 | US | 2013257210 | A1 | 03 October 2013 |
| | | | | US | 9369012 | B2 | 14 June 2016 |
| | | | | EP | 2698900 | A1 | 19 February 2014 |
| | | | | EP | 2698900 | A4 | 30 March 2016 |
| | | | | EP | 2698900 | B1 | 25 August 2021 |
| | | | | WO | 2012141085 | A1 | 18 October 2012 |
| | | | | JP | 2012227993 | A | 15 November 2012 |
| | | | | JP | 5835928 | B2 | 24 December 2015 |
| | | | | CN | 103404001 | B | 08 September 2017 |
| CN | 105162301 | A | 16 December 2015 | None | | | |
| CN | 110011444 | A | 12 July 2019 | CN | 209709784 | U | 29 November 2019 |
| CN | 217216133 | U | 16 August 2022 | None | | | |